# EUROPEAN PATENT APPLICATION

(11) **EP 2 889 582 A1**
(43) Date of publication of application: **01.07.2015**
(21) Application number: 14199587.8
(22) Date of filing: 22.12.2014
(51) Int. Cl.: G01C 21/26, G06F 17/30

(54) **Information management system**

(30) Priority: 25.12.2013 JP 2013267603
(71) Applicant: Knowledgesuite, Inc., Minato-ku Tokyo 108-0022 (JP)
(72) Inventor: Inaba, Yuichi, Minato-ku, Tokyo 108-0022 (JP)
(74) Representative: Klunker . Schmitt-Nilson . Hirsch

(57) **Abstract**

An information management system enables the display position of a location mark on a map to be corrected with a simple operation. The information management system of the present invention includes: a geographical coordinate information acquisition unit acquiring geographical coordinate information corresponding to a designated address; and a display processing unit displaying a map corresponding to the address on a display unit and displaying a location mark on the map at a position corresponding to the geographical coordinate information. Further, the display processing unit has a function of changing the display position of the location mark on the map according to an operation by an operator, and a function of correcting the geographical coordinate information according to the changed display position of the location mark and outputting the corrected geographical coordinate information as the geographical coordinate information on the address corresponding to the location mark before being changed.

## Description

### BACKGROUND OF THE INVENTION

### Field of the Invention

The present invention relates to an information management system capable of managing data having geographical coordinate information attached thereto, and specifically to an information management system involving a function of correcting the geographical coordinate information.

### Description of the Related Art

Systems are known that manage a plurality of management data, such as customer data, by attaching geographical coordinate information (for example, latitude and longitude information) thereto. For example, such a technique is disclosed in Japanese National Publication of International Patent Application No. 2012-506559, paragraphs [0014] to [0020] and Figure 1.

In a system described in Japanese National Publication of International Patent Application No. 2012-506559, client data as management data includes address information. The address information is converted into geographical coordinate information using geocoding. When a map is displayed on a screen of a computing device, a location mark is displayed on the map at a position corresponding to the geographical coordinates.

The above system allows a user of the computing device to refer to the location display on the map to easily visit the home or office of the user's client.

Geocoding may be performed using, for example, a general-purpose Internet service or general-purpose software.

Unfortunately, with a general-purpose Internet service or general-purpose software, geographical coordinate information resulting from geocoding may be inaccurate or inappropriate.

For example, for a large area of land divided into small plots and sold individually, each of the plots except one is assigned a new address. It takes a certain period of time for a general-purpose Internet service or general-purpose software to support the new addresses. Consequently, geocoding may mark a position different from a relevant address or determine the nonexistence of the relevant address, resulting in a failure to display a correct location mark on a map.

There may also be a case that a large area of land is assigned a single address. In many geocoding services and geocoding software products, geographical coordinate values of addresses in the large area are set to about the center of the large area corresponding to the single address. As a result, the display position of a location mark on a map may not match a location desired by a user (for example, the location of a building to be visited by the user, or the location of an entrance gate).

### SUMMARY OF THE INVENTION

An object of the present invention is to provide an information management system that enable a location mark to be displayed at an accurate and appropriate position on a map.
(1) To this end, an information management system according to a first aspect of the present invention includes:
   a geographical coordinate information acquisition unit acquiring geographical coordinate information corresponding to a designated address; and a display processing unit displaying a map corresponding to the address on a display unit and displaying a location mark on the map at a position corresponding to the geographical coordinate information, wherein the display processing unit has a function of changing the display position of the location mark on the map according to an operation by an operator, and a function of correcting the geographical coordinate information according to the changed display position of the location mark and outputting the corrected geographical coordinate information as the geographical coordinate information on the address corresponding to the location mark before being changed.
   Preferably, the information management system according to the first aspect of the present invention further includes a management data generation unit generating predetermined management data containing the address, wherein, if the geographical coordinate information is corrected by the display processing unit, the management data generation unit attaches the corrected geographical coordinate information as the geographical coordinate information on the address registered in the management data, and if the geographical coordinate information is not corrected by the display processing unit, the management data generation unit attaches the geographical coordinate information acquired by the geographical coordinate information acquisition unit as the geographical coordinate information on the address registered in the management data.
   Preferably, the information management system according to the first aspect of the present invention includes: an input apparatus including the geographical coordinate information acquisition unit, the display processing unit, and the management data generation unit; and a management data server storing and distributing the management data.
   Preferably, the information management system according to the first aspect of the present invention includes a mobile communication terminal receiving the management data from the management data server via a communication line and displaying the location mark on a map based on the geographical coordinate information attached to the management data.
   With the information management system according to the first aspect of the present invention, the geographical coordinate information corresponding to the designated address is corrected only by changing the display position of the location mark on the map by the operator. Therefore, the display position of the location mark can be corrected to an accurate and appropriate position only with a simple operation.
   The information management system according to the first aspect of the present invention may further include the management data generation unit. This allows the geographical coordinate information corresponding to the address registered in the management data to be corrected only with a simple operation.
   In the information management system according to the first aspect of the present invention, the management data generated in the input apparatus may be stored and distributed by the management data server. This allows the management data and the map with the location mark to be viewed on other communication terminals.
   The information management system according to the first aspect of the present invention may include the mobile communication terminal. This allows the management data and the map with the location mark to be viewed on the mobile communication terminal.
(2) An information management system according to a second aspect of the present invention includes: an input apparatus generating management data; and a management data server receiving the management data from the input apparatus and storing the management data, wherein the input apparatus includes: a geographical coordinate information acquisition unit acquiring geographical coordinate information corresponding to a designated address from an external general-purpose map coordinate information server; a display processing unit having a function of displaying a map corresponding to the address on a display unit and displaying a location mark on the map at a position corresponding to the geographical coordinate information, a function of changing the display position of the location mark on the map according to an operation by an operator, a function of correcting the geographical coordinate information according to the changed display position of the location mark, and a function of, if the geographical coordinate information is corrected, attaching the corrected geographical coordinate information as the geographical coordinate information on the address registered in the management data, and if the geographical coordinate information is not corrected, attaching the geographical coordinate information acquired by the geographical coordinate information acquisition unit as the geographical coordinate information on the address registered in the management data, and outputting the geographical coordinate information as the geographical coordinate information on the address corresponding to the location mark before being changed; a management data generation unit generating the management data containing the geographical coordinate information received from the display processing unit and the address; and a communication unit receiving the management data from the management data generation unit and transmitting the management data to the management data server to be stored by the management data server, wherein the management data server provides the stored management data as the management data server's own management data for use in the management data server's system to a mobile communication terminal by request.

Preferably, in the information management system according to the second aspect of the present invention, the mobile communication terminal receives the management data from the management server via a communication line and displays the location mark on a map based on the geographical coordinate information attached to the management data.

With the information management system according to the second aspect of the present invention, the geographical coordinate information corresponding to the designated address is corrected only by changing the display position of the location mark on the map by the operator. Therefore, the display position of the location mark can be corrected to an accurate and appropriate position only with a simple operation and displayed on the mobile communication terminal.

In the information management system according to the second aspect of the present invention, the mobile communication terminal may display the location mark on a map based on the geographical coordinate information attached to the management data. This allows the corrected location mark to be displayed on the mobile communication terminal only with simple processing.

### BRIEF DESCRIPTION OF THE DRAWINGS

Other obj ects and advantages of the present invention will be described with reference to the accompanying drawings in which:
FIG. 1 is a conceptual diagram illustrating a general configuration of an information management system according to a first embodiment;
FIG. 2 is a block diagram conceptually illustrating a functional configuration of an input apparatus according to the first embodiment;
FIG. 3 is a conceptual diagram illustrating management data managed in the information management system according to the first embodiment;
FIG. 4 is a conceptual diagram for describing the operation of the information management system according to the first embodiment; and
FIG. 5 is a conceptual diagram for describing the operation of the information management system according to the first embodiment.

### DETAILED DESCRIPTION OF THE PREFERRED EMBODIMENT

Now, an embodiment of the present invention will be described with reference to the drawings.

### First Embodiment

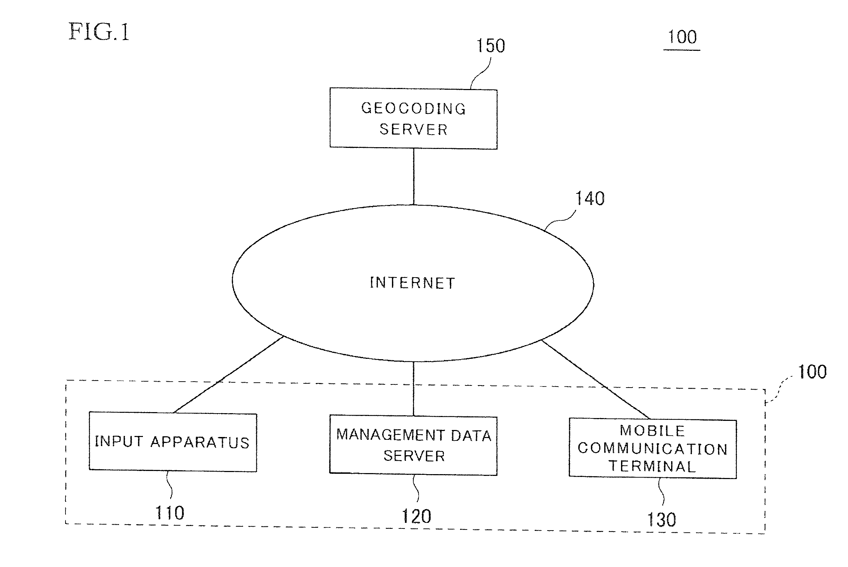

An information management system according to a first embodiment of the present invention will be described with reference to FIGS. 1 to 5. The first embodiment will be described for an exemplary case in which an information management system 100 is used to manage customer information.

FIG. 1 is a conceptual diagram illustrating a general configuration of the information management system 100 according to the first embodiment.

As illustrated in FIG. 1, the information management system 100 includes an input apparatus 110, a management data server 120, and a mobile communication terminal 130.

The input apparatus 110 and the mobile communication terminal 130 are communicatively connected to the management data server 120 via the Internet 140.

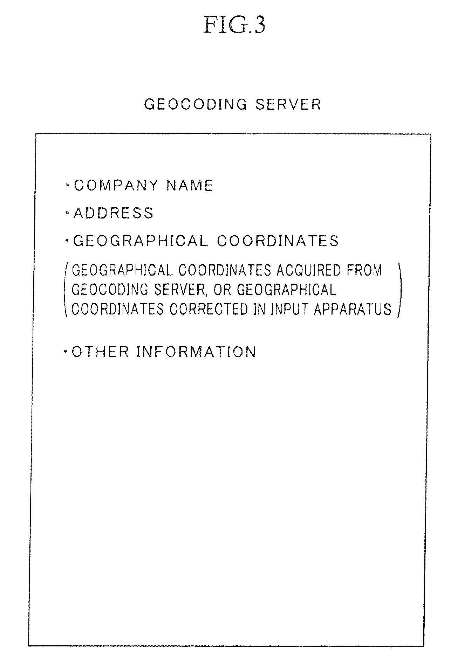

The input apparatus 110 is an apparatus for generating management data (see FIG. 3) using operator-input information and the like. The input apparatus 110 may be a personal computer, for example.

The management data server 120 stores the management data generated by the input apparatus 110 in a database (not shown) and distributes the management data. The database may be provided within the management data server 120 or may be communicatively connected to the management data server 120 via a communication line such as the Internet 140. The management data server 120 may be a server computer, for example.

The mobile communication terminal 130 is a communication terminal for accessing the management data server 120 to view the management data. The mobile communication terminal 130 allows viewing, as text information, various kinds of information (such as an address) in the management data, as well as displaying a map on its screen to display a location mark on the map at a position corresponding to the address, as will be described below. The mobile communication terminal 130 may be a mobile computing device, such as a smartphone, cellular phone, or notebook personal computer, for example.

A geocoding server 150 stores associations between address information and geographical coordinate information in a database (not shown). Geographical coordinates here refer to coordinates for defining a geographical position, and they may be the latitude and longitude, for example. The geocoding server 150 is communicatively connected to the input apparatus 110 via the Internet 140. In response to receiving address information from the input apparatus 110, the geocoding server 150 transmits corresponding geographical coordinate information to the input apparatus 110.

The geocoding server 150 may be a server computer of a company providing a geocoding data providing service. Alternatively, the owner, manager, or the like of the information management system 100 may provide the geocoding server 150 as part of the information management system 100.

Other types of communication networks may also be used in place of the Internet 140.

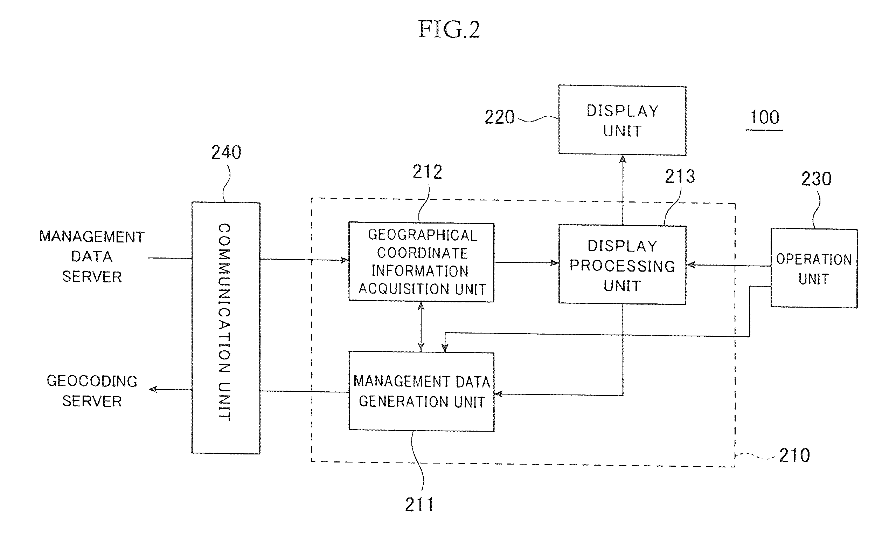

FIG. 2 is a block diagram conceptually illustrating a configuration of the input apparatus 110.

As illustrated in FIG. 2, the input apparatus 110 includes an operational processing section 210, a display unit 220, an operation unit 230, and a communication unit 240.

The operational processing section 210 executes a predetermined application program to implement a management data generation unit 211, a geographical coordinate information acquisition unit 212, and a display processing unit 213 in software. It is to be understood that these units 211 to 213 may also be implemented in hardware. The operational processing section 210 causes these units 211 to 213 to operate in a manner described below to generate customer information (see FIG. 3).

The display unit 220 may be a liquid crystal display, for example. The display unit 220 displays text information, a map with a location mark, etc. on its screen based on signals input from the display processing unit 213 , as will be described below.

The operation unit 230 may be a keyboard or a computer mouse, for example. As will be described below, the operation unit 230 is used for purposes such as inputting company name information and address information to the operational processing section 210, and changing the display position of a location mark displayed on the display unit 220.

The communication unit 240 is used for communicatively connecting the input apparatus 110 to the management data server 120 and the geocoding server 150.

Now, a functional configuration of the operational processing section 210 will be described in more detail.

The management data generation unit 211 generates customer information. As illustrated in FIG. 3, the customer information includes information such as company name information, address information, and geographical coordinate information. Among these information items, the company name information and the address information are input to the management data generation unit 211 by an operator operating the operation unit 230. The management data generation unit 211 temporarily stores the information such as the company name information and the address information and sends the address information to the geographical coordinate information acquisition unit 212. The management data generation unit 211 further acquires geographical coordinate information from the display processing unit 213 in a manner to be described below, and completes management data using the geographical coordinate information and the stored information such as the company name information and the address information. The completed management data is transmitted to the management data server 120 via the communication unit 240 and the Internet 140 (see FIG. 1).

The geographical coordinate information acquisition unit 212 receives the address information from the management data generation unit 211 and transmits the address information to the geocoding server 150 via the communication unit 240 and the Internet 140. Consequently, the geographical coordinate information acquisition unit 212 can acquire the geographical coordinate information from the geocoding server 150, as described above. The acquired geographical coordinate information is transferred to the display processing unit 213 .

The display processing unit 213 causes text information, a map, etc. to be displayed on the screen of the display unit 220 . Data of the map to be displayed may be data stored in memory (not shown) of the input apparatus 110. Alternatively, the map data may be externally obtained via the Internet 140 or the like.

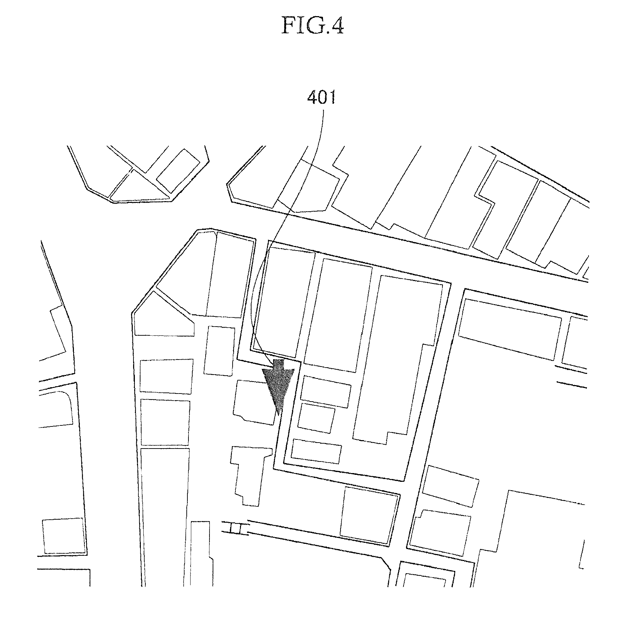

The display processing unit 213, upon receiving the geographical coordinate information from the geographical coordinate information acquisition unit 212, converts the geographical coordinates into coordinates on the display screen, and causes a location mark 401 to be displayed on the screen of the display unit 220 at a position indicated by the coordinates (see FIG. 4).

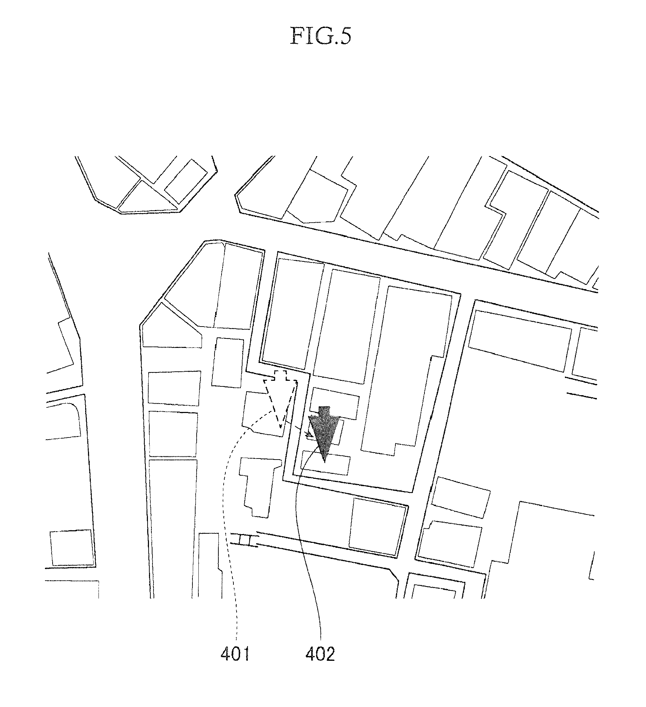

The display processing unit 213 further changes the location mark 401 into a location mark 402 at a different display position in response to an input signal from the operation unit 230 (see FIG. 5) . The display processing unit 213 then corrects the geographical coordinate information according to the coordinates of the displayed position of the location mark 402 (the coordinates of the changed display position). The corrected geographical coordinate information is sent to the above-described management data generation unit 211. If the display position is not changed by the operation unit 230 (i.e. , if the geographical coordinate information is not corrected), the display processing unit 213 simply sends the geographical coordinate information received from the geographical coordinate information acquisition unit 212 to the management data generation unit 211.

Now, a procedure will be described in which the information management system 100 according to the first embodiment generates the management data.

First, the operator operates the operation unit 230 to input company name information and address information to the input apparatus 110. The operator can see the result of the input using the display unit 220. As described above, the information input to the input apparatus 110 is temporarily stored in the management data generation unit 211.

The geographical coordinate information acquisition unit 212 receives the address information temporarily stored in the management data generation unit 211 and sends it to the communication unit 240. The communication unit 240 transmits the address information to the geocoding server 150 via the Internet 140.

The geocoding server 150 receives the address information and reads geographical coordinate information corresponding to the received address information from the database (not shown) . The read geographical coordinate information is transmitted to the communication unit 240 of the input apparatus 110 via the Internet 140. The communication unit 240 transfers the received geographical coordinate information to the geographical coordinate information acquisition unit 212.

In this manner, the geographical coordinate information acquisition unit 212 acquires the geographical coordinate information corresponding to the address information. The geographical coordinate information is sent from the geographical coordinate information acquisition unit 212 to the display processing unit 213.

Based on this geographical coordinate information, the display processing unit 213 determines a map to be displayed on the display unit 220. That is, a map of an area within a predetermined distance from the point indicated by the geographical coordinate information is displayed on a predetermined scale on the display unit 220. The scale may be changed as appropriate by the operator using the operation unit 230.

The display processing unit 213 further converts the received geographical coordinate information into coordinates on the screen of the display unit 220. The display processing unit 213 causes the location mark 401 to be displayed at a position indicated by the resulting display coordinates (see FIG. 4). The map and the location mark 401 may be displayed on the same screen as the above-described company name information and address information, simultaneously with these information items.

The operator can thus determine whether or not the display position of the location mark 401 is accurate and appropriate. If the operator determines that the display position of the location mark 401 is accurate and appropriate, the operator performs an operation for accepting the position of the location mark 401. For example, the acceptance operation may be performed by clicking on an "OK" icon on the screen.

The display position of the location mark 401 may be inaccurate or inappropriate for the following reasons, for example.

One exemplary case is that the relevant address is not registered in the database of the geocoding server 150. For example, the address received by the geocoding server 150 is "123 X Street, " whereas "123" is not registered in the database of the geocoding server 150. Then, instead of geographical coordinate information on "123 X Street, " the geocoding server 150 transmits geographical coordinate information on another location on "X Street." Consequently, the position of the location mark 401 displayed on the display unit 220 does not accurately match the address information.

Another exemplary case is that a single address is assigned to a large area of land, and only geographical coordinate information on one point in the area (typically a point at about the center of the area) is stored in the database of the geocoding server 150. When a system user displays a map for visiting such an address, the system user usually desires to know the location of an entrance gate for the address or the location of a building to visit. Consequently, the display position of the location mark 401 does not appropriately correspond to the display position desired by the system user.

If the display position of the location mark 401 is inaccurate or inappropriate, the operator operates the operation unit 230 to move the position of the location mark 401 on the screen of the display unit 220 (see FIG. 5). This operation causes an operation signal to be output from the operation unit 230 to the display processing unit 213.

Based on this operation signal, the display processing unit 213 determines the moving direction and moving distance of the location mark 401 on the screen. New display coordinates after the change are thus determined. The new location mark 402 corresponding to the new display coordinates is displayed on the display unit 220.

If the operator determines that the changed position of the location mark 402 is accurate and appropriate, the operator performs an operation for accepting the position of the location mark 402. The operation for accepting may be the same as the above-described acceptance operation. If the operator determines that the changed position of the location mark 402 is inaccurate or inappropriate, the operator may repeat changing the position of the location mark 402 until the position is determined to be accurate and appropriate, and then perform the acceptance operation.

Once the display position of the location mark 402 is accepted, the display processing unit 213 computes geographical coordinate information corresponding to the screen coordinates of the location mark 402. Thus, the geographical coordinate information of the geocoding server 150 has been corrected to accurate and appropriate geographical coordinate information.

The display processing unit 213 then sends the geographical coordinate information accepted by the operator to the management data generation unit 211. That is, if the location mark 401 is accepted, the geographical coordinate information provided by the geocoding server 150 is simply sent to the management data generation unit 211. If the location mark 402 is accepted, the corrected geographical coordinate information is sent to the management data generation unit 211.

The management data generation unit 211 generates customer information (see FIG. 3) using the received geographical coordinate information and the temporarily beforehand stored information such as the company name and the address information. The management data generation unit 211 sends the generated customer information to the communication unit 240.

The communication unit 240 transmits the customer information to the management data server 120 via the Internet 140.

The management data server 120 stores the received customer information in the database (not shown). This allows the customer information to be viewed on the mobile communication terminal 130.

Thus, when a user of the mobile communication terminal 130 is traveling for visiting the customer, the user can refer to the location mark displayed on the map, together with the address etc. in the customer information.

As has been described, according to the first embodiment, the geographical coordinate information is corrected only by changing the display position of the location mark on the map by the operator. Therefore, the display position of the location mark can be corrected to an accurate and appropriate position only with a simple operation.

Since the management data generated in the input apparatus 110 can be stored and distributed by the management data server 120, the management data and the map with the location mark can be viewed on many mobile communication terminals via the Internet 140.

Although the first embodiment 1 takes as an example the case in which the present invention is used for managing the customer data, the present invention is also applicable to management of other types of personal information. The present invention is further applicable to information management systems not intended for personal information management, such as general electronic maps and navigation systems.

Although the first embodiment 1 describes the example in which the input apparatus 110 and the mobile communication terminal 130 are provided separately, a single communication device may be used as both the input apparatus 110 and the mobile communication terminal 130.

Further, although the function of generating the management data (the management data generation unit 211) and the function of acquiring the geographical coordinate information from the geocoding server 150 (the geographical coordinate information acquisition unit 212) are provided in the input apparatus 110, these functions may be provided in the management data server 120.

In addition, although the first embodiment uses the geographical coordinates themselves corresponding to the display position of the location mark 402 as the corrected geographical coordinate information, other types of information may also be used as long as the position of the location mark 402 can be defined. For example, the corrected geographical coordinate information may be information including both the geographical coordinate information provided by the geocoding server 150 and difference information indicating the moving direction and moving distance of the location mark moved by the operator.

## Claims

1. An information management system comprising:
a geographical coordinate information acquisition unit acquiring geographical coordinate information corresponding to a designated address; and
a display processing unit displaying a map corresponding to the address on a display unit and displaying a location mark on the map at a position corresponding to the geographical coordinate information, wherein
the display processing unit has
a function of changing the display position of the location mark on the map according to an operation by an operator, and
a function of correcting the geographical coordinate information according to the changed display position of the location mark and outputting the corrected geographical coordinate information as the geographical coordinate information on the address corresponding to the location mark before being changed.

2. The information management system according to claim 1, further comprising a management data generation unit generating predetermined management data containing the address, wherein
if the geographical coordinate information is corrected by the display processing unit, the management data generation unit attaches the corrected geographical coordinate information as the geographical coordinate information on the address registered in the management data, and
if the geographical coordinate information is not corrected by the display processing unit, the management data generation unit attaches the geographical coordinate information acquired by the geographical coordinate information acquisition unit as the geographical coordinate information on the address registered in the management data.

3. The information management system according to claim 2, comprising:
an input apparatus including the geographical coordinate information acquisition unit, the display processing unit, and the management data generation unit; and
a management data server storing and distributing the management data.

4. The information management system according to claim 3, comprising a mobile communication terminal receiving the management data from the management data server via a communication line and displaying the location mark on a map based on the geographical coordinate information attached to the management data.

5. An information management system comprising: an input apparatus generating management data; and a management data server receiving the management data from the input apparatus and storing the management data, wherein
the input apparatus comprises:
a geographical coordinate information acquisition unit acquiring geographical coordinate information corresponding to a designated address from an external general-purpose map coordinate information server;
a display processing unit having
a function of displaying a map corresponding to the address on a display unit and displaying a location mark on the map at a position corresponding to the geographical coordinate information,
a function of changing the display position of the location mark on the map according to an operation by an operator,
a function of correcting the geographical coordinate information according to the changed display position of the location mark, and
a function of, if the geographical coordinate information is corrected, attaching the corrected geographical coordinate information as the geographical coordinate information on the address registered in the management data, and if the geographical coordinate information is not corrected, attaching the geographical coordinate information acquired by the geographical coordinate information acquisition unit as the geographical coordinate information on the address registered in the management data, and outputting the geographical coordinate information as the geographical coordinate information on the address corresponding to the location mark before being changed;
a management data generation unit generating the management data containing the geographical coordinate information received from the display processing unit and the address; and
a communication unit receiving the management data from the management data generation unit and transmitting the management data to the management data server to be stored by the management data server, wherein
the management data server provides the stored management data as the management data server's own management data for use in the management data server's system to a mobile communication terminal by request.

6. The information management system according to claim 5, wherein the mobile communication terminal receives the management data from the management server via a communication line and displays the location mark on a map based on the geographical coordinate information attached to the management data.
